# EUROPEAN PATENT APPLICATION

(11) **EP 4 796 404 A1**
(43) Date of publication of application: **26.08.2026**
(21) Application number: 24896029.6
(22) Date of filing: 11.10.2024
(51) Int. Cl.: B60W 30/182, B60W 60/00, B60W 50/14

(54) **DRIVING AUTHORITY ALLOCATION METHOD, APPARATUS AND DEVICE UNDER HUMAN-MACHINE CO-DRIVING, AND VEHICLE, MEDIUM AND PROGRAM PRODUCT**

(30) Priority: 30.11.2023 CN 202311623315
(71) Applicant: VOYAH Automotive Technology Co., Ltd., Wuhan, Hubei 430109 (CN)
(72) Inventor: FU, Bin, Wuhan, Hubei 430050 (CN); LIU, Huikai, Wuhan, Hubei 430050 (CN); SUN, Xiongfeng, Wuhan, Hubei 430050 (CN); WANG, Junjun, Wuhan, Hubei 430050 (CN); XIE, Wenyun, Wuhan, Hubei 430050 (CN); ZHAO, Fuwei, Wuhan, Hubei 430050 (CN); JI, Wen, Wuhan, Hubei 430050 (CN); LIU, Te, Wuhan, Hubei 430050 (CN); HUANG, Xiwang, Wuhan, Hubei 430050 (CN); HOU, Mingyang, Wuhan, Hubei 430050 (CN)
(74) Representative: Murgitroyd & Company
(86) International application number: PCT/CN2024/124213
(87) International publication number: WO 2025/112935

(57) **Abstract**

The present disclosure provides a driving authority allocation method, apparatus and device under human-machine co-driving, a vehicle, a medium and a program product. The method includes: calculating a total field strength corresponding to each driving risk partition based on a type of a risk source, operating condition information of a vehicle, operating condition information of the risk source, and a distance between the vehicle and the risk source in a driving environment; determining location information of a risk region perceived by a driver based on visual information of the driver; calculating a risk perception consistency index based on the total field strength corresponding to each driving risk partition and the location information of the risk region; and determining a driving authority switching weight based on the risk perception consistency index and a preset risk perception consistency index threshold.

## Description

### CROSS-REFERENCE TO RELATED APPLICATIONS

The present application claims priority to Chinese patent application No. 202311623315.7, filed on November 30, 2023, the entire content of which is incorporated herein by reference.

### TECHNICAL FIELD

The present disclosure relates to the field of intelligent driving technologies, specifically to a driving authority allocation method, apparatus and device under human-machine co-driving, a vehicle, a medium and a program product.

### BACKGROUND

With the increasing power of intelligent vehicle hardware and the maturity of driving theoretical systems, the level of vehicle automation continues to rise. However, until the purely technical challenge of achieving full autonomy is universally realized, human-machine co-driving will persist for the foreseeable future. Human-machine co-driving refers to a scenario where fully autonomous driving cannot be guaranteed, in which the task of driving the vehicle is shared between a human driver and an intelligent driving system. A human-machine co-driving interaction system is regarded as a critical factor in the safe operation of current intelligent driving vehicles. The human-machine co-driving interaction system provides a means of exchanging driving information and operations between humans and machines, and its design makes autonomous driving behavior clearer and more intuitive.

Nevertheless, advanced intelligent driving systems are not yet fully capable of handling complex and unpredictable traffic environments, while human drivers demonstrate superior adaptability on complex environments than the intelligent driving systems. Therefore, how to integrate manual and intelligent driving to achieve a reasonable allocation of driving authority is the key to leveraging the advantages of human-machine co-driving and ensuring driving safety, and it represents a pressing challenge that needs to be addressed.

### SUMMARY

Embodiments of the present disclosure provide a driving authority allocation method, apparatus and device under human-machine co-driving, a vehicle, a medium and a program product, which can address the technical problem in existing methods of being unable to achieve a reasonable allocation of driving authority under human-machine co-driving.

In a first aspect of the present disclosure, a driving authority allocation method under human-machine co-driving is provided, including: calculating a total field strength corresponding to each driving risk partition based on a type of a risk source, operating condition information of a vehicle, operating condition information of the risk source, and a distance between the vehicle and the risk source in a driving environment; determining location information of a risk region perceived by a driver based on visual information of the driver; calculating a risk perception consistency index based on the total field strength corresponding to each driving risk partition and the location information of the risk region; and determining a driving authority switching weight based on the risk perception consistency index and a preset risk perception consistency index threshold to perform driving authority switching and allocation according to the driving authority switching weight.

In a second aspect of the present disclosure, a driving authority allocation apparatus under human-machine co-driving is provided, including: a first calculation module configured to calculate a total field strength corresponding to each driving risk partition based on a type of a risk source, operating condition information of a vehicle, operating condition information of the risk source, and a distance between the vehicle and the risk source in a driving environment; a determination module configured to determine location information of a risk region perceived by a driver based on visual information of the driver; a second calculation module configured to calculate a risk perception consistency index based on the total field strength corresponding to each driving risk partition and the location information of the risk region; and an allocation module configured to determine a driving authority switching weight based on the risk perception consistency index and a preset risk perception consistency index threshold to perform driving authority switching and allocation according to the driving authority switching weight.

In a third aspect of the present disclosure, a driving authority allocation device under human-machine co-driving is provided, including a processor, a memory, and a driving authority allocation program under human-machine co-driving stored on the memory and executable by the processor. When the driving authority allocation program under human-machine co-driving is executed by the processor, steps of the driving authority allocation method under human-machine co-driving provided in the first aspect are implemented.

In a fourth aspect of the present disclosure, a vehicle is provided, including the driving authority allocation device under human-machine co-driving provided in the third aspect.

In a fifth aspect of the present disclosure, a computer-readable storage medium is provided, including a driving authority allocation program under human-machine co-driving stored thereon. When the driving authority allocation program under human-machine co-driving is executed by a processor, steps of the driving authority allocation method under human-machine co-driving provided in the first aspect are implemented.

In a sixth aspect of the present disclosure, a computer program product is provided, including computer instructions. When the computer instructions are executed by a processor, steps of the driving authority allocation method under human-machine co-driving provided in the first aspect are implemented.

### BRIEF DESCRIPTION OF THE DRAWINGS

FIG. 1 is a schematic flow diagram of a driving authority allocation method under human-machine co-driving according to some embodiments of the present disclosure.
FIG. 2 is a schematic diagram of the division of driving risk partitions within a visible range of a cockpit according to some embodiments of the present disclosure.
FIG. 3 is a schematic diagram of risk region matching according to some embodiments of the present disclosure.
FIG. 4 is a schematic diagram of risk region matching according to some other embodiments of the present disclosure.
FIG. 5 is a schematic diagram of functional modules of a driving authority allocation apparatus under human-machine co-driving according to some embodiments of the present disclosure.
FIG. 6 is a schematic diagram of a hardware structure of a driving authority allocation device under human-machine co-driving according to some embodiments of the present disclosure.

### DETAILED DESCRIPTION OF THE EMBODIMENTS

In order to make those skilled in the art to better understand the present disclosure, the technical solutions in the embodiments of the present disclosure will be described clearly and completely below with reference to the accompanying drawings of the embodiments of the present disclosure. Apparently, the described embodiments are merely some of but not all of the embodiments of the present disclosure. Based on the embodiments of the present disclosure, all other embodiments obtained without any creative efforts by a person of ordinary skill in the art fall within the scope of protection of the present disclosure.

To make the objectives, technical solutions and advantages of the present disclosure clearer, the embodiments of the present disclosure will be described in further detail below with reference to the accompanying drawings.

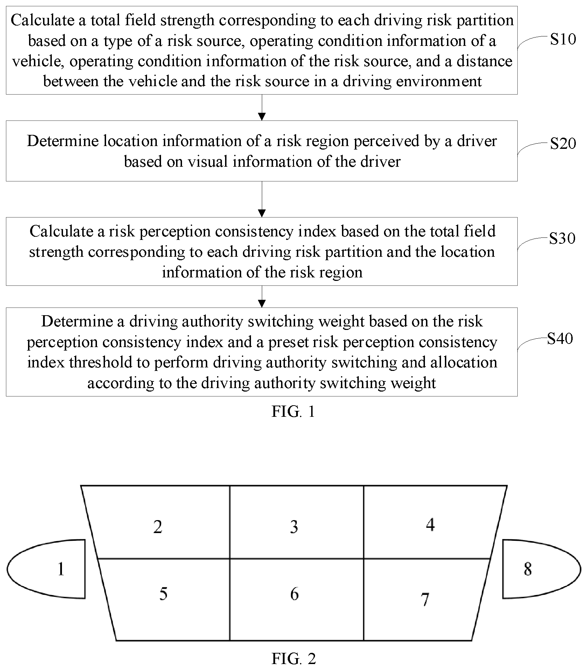

In a first aspect, some embodiments of the present disclosure provide a driving authority allocation method under human-machine co-driving. Referring to FIG. 1, FIG. 1 is a schematic flow diagram of a driving authority allocation method under human-machine co-driving according to some embodiments of the present disclosure. As shown in FIG. 1, the driving authority allocation method under human-machine co-driving includes the following steps S10 to S40.

In the step S10, a total field strength corresponding to each driving risk partition is calculated based on a type of a risk source, operating condition information of a vehicle, operating condition information of the risk source, and a distance between the vehicle and the risk source in a driving environment.

In some implementations, driving risk partitions around a vehicle may be divided based on a visible range of a vehicle cockpit to obtain a plurality of driving risk partitions. FIG. 2 is a schematic diagram of the division of driving risk partitions within a visible range of a cockpit according to some embodiments of the present disclosure. Referring to FIG. 2, the driving risk partitions around the vehicle are divided based on the visible range of the vehicle cockpit to obtain 8 driving risk partitions in some embodiments of the present disclosure. Partitions 2, 3, 4, 5, 6, and 7 are driving risk partitions in directions of the front windshield, and partitions 1 and 8 are driving risk partitions in directions of the left and right sides and the rearview mirror direction (rear). It should be noted that the above partitions are merely exemplary presentations, and other partition settings may be made according to actual needs to obtain driving risk partitions of different numbers and sizes, which are not limited herein.

For each driving risk partition, at each sampling moment within a preset sampling cycle, the total field strength corresponding to each driving risk partition is calculated based on the type of the risk source, the operating condition information of the vehicle, the operating condition information of the risk source, and the distance between the vehicle and the risk source in the driving environment where the vehicle is located. The total field strength corresponding to a driving risk partition is used to indicate a degree of risk posed by risk sources in the driving risk partition to the vehicle, and a distribution of driving risk regions perceived by an intelligent driving system may be indicated by magnitudes of total field strengths of different driving risk partitions. The operating condition information may include a speed and a mass. The risk sources may include a dynamic risk source and a static risk source, and risk source types corresponding to different risk sources may be set according to actual needs, which are not limited herein. In some implementations, the dynamic risk source may include objects in a dynamic state around the vehicle, for example, moving vehicles, etc. The static risk source may include objects in a static state around the vehicle, for example, stationary vehicles, etc.

In the step S20, location information of a risk region perceived by a driver is determined based on visual information of the driver.

It can be understood that, since the driver's attention during driving varies in real time, a risk region perceived by the driver may be one of the above driving risk partitions or may be outside the driving risk partitions. Therefore, in some implementations, at each sampling moment within the preset sampling cycle, the visual information of the driver may also be captured to obtain variations in the driver's attention to risk regions around the vehicle, thereby locating the driving risk region where the driver's attention is focused, and thus obtaining the location information of the risk region corresponding to the risk region perceived by the driver.

In some implementations, an eye tracker technology may be used to capture the visual information of the driver to locate the risk region perceived by the driver. Methods and principles of how the eye tracker technology determines the region of attention by detecting the movement trajectory of the driver's gaze during driving, the reaction time and frequency to the road environment, etc., may be referred to in related art and will not be described in detail herein.

In the step S30, a risk perception consistency index is calculated based on the total field strength corresponding to each driving risk partition and the location information of the risk region.

It can be understood that the greater the total field strength, the more likely the intelligent driving system considers that there is a risk in that driving risk partition. In other words, a driving risk partition with a greater total field strength is more likely to become a risk region perceived by the intelligent driving system. Therefore, a degree of risk existing in each driving risk partition may be obtained through a magnitude of the total field strength corresponding to each driving risk partition, thereby determining a risk partition perceived by the intelligent driving system. Then, by matching the risk partition perceived by the intelligent driving system with a risk partition perceived by the driver determined through the location information of the risk region, i.e., determining whether the risk region perceived by the intelligent driving system and the risk region perceived by the driver are consistent, the risk perception consistency index can be determined. The risk perception consistency index is used to indicate a degree of match between the risk region perceived by the intelligent driving system and the risk region perceived by the driver. The higher the risk perception consistency index, the higher the degree of match between the risk region perceived by the intelligent driving system and the risk region perceived by the driver.

In the step S40, a driving authority switching weight is determined based on the risk perception consistency index and a preset risk perception consistency index threshold to perform driving authority switching and allocation according to the driving authority switching weight.

It can be understood that the risk perception consistency index threshold refers to an index value corresponding to complete consistency between the risk region perceived by the intelligent driving system and the risk region perceived by the driver. Its specific value can be determined according to actual needs or through experimentation, and is not limited herein. In some implementations, a calculation of risk assessment consistency is performed by using the risk perception consistency index and the risk perception consistency index threshold. In some implementations, a relative safety index may be set based on the risk perception consistency index to indicate a risk assessment consistency level. Exemplarily, a relative safety index for indicating the risk assessment consistency level may be obtained according to the following formula: $RM = M / M *$ where *RM* represents a relative driving risk consistency index, *M* represents the risk perception consistency index, and *M** represents the risk perception consistency index threshold.

In some implementations, the driving authority switching weight may be allocated based on formula (2) and the above relative driving risk consistency index: $\left\{\begin{matrix}W = 2 , RM < 0.3 \\ W = 1 , 0.3 \leq RM < 0.6 \\ W = 0 , RM \geq 0.6\end{matrix}\right.$ where *W* represents the driving authority switching weight, which indicates a human-machine driving authority switching speed. It should be noted that the above specific value settings for the driving authority switching weight are merely exemplary presentations and may be adjusted according to actual needs, as long as it satisfies that the lower the relative driving risk consistency index, the greater the corresponding driving authority switching weight, and the higher the relative driving risk consistency index, the smaller the corresponding driving authority switching weight. It should be understood that the lower the relative driving risk consistency index, the faster the driving authority switching, while when the relative driving risk consistency index is relatively high, the driving authority is handed over to the intelligent driving system and the driving authority is not switched.

The driving authority switching weight may be used to indicate whether human-machine driving authority switching is required, and a switching transition time length when the human-machine driving authority switching is required. In some implementations, when the relative driving risk consistency index is less than 0.3, it indicates that the relative driving risk consistency index is low, and in this case, fast driving authority switching is required, i.e., the switching transition time may be relatively short. When the relative driving risk consistency index is within a range of [0.3, 0.6), it indicates that the relative driving risk consistency index is at an intermediate level, the driving authority switching is required, but the switching speed does not need to be very fast, i.e., the switching transition time may be relatively long. When the relative driving risk consistency index is greater than or equal to 0.6, it indicates that the relative driving risk consistency index is high, and in this case, the driving authority switching is not required. For example, if the intelligent driving system currently controls the vehicle, the vehicle may still be controlled by the intelligent driving system. It should be noted that the above ranges for the relative driving risk consistency index are merely presentations of the embodiments and may be adjusted according to actual needs.

In the driving authority allocation method under human-machine co-driving provided by some embodiments of the present disclosure, the risk region perceived by the intelligent driving system may be obtained by calculating the driving risk field strength, and the risk region perceived by the driver may be obtained based on the location information of the risk region determined from the visual information of the driver. Then, the human-machine risk perception consistency situation can be determined according to the degree of match between the risk region perceived by the intelligent driving system and the risk region perceived by the driver, and then the driving authority switching weight may be objectively calculated based on the human-machine risk perception consistency situation and the risk perception consistency index threshold, and the driving authority switching and allocation are performed according to the driving authority switching weight, thereby achieving the reasonable allocation of driving authority under human-machine co-driving. Thus, in the present embodiment, the attribution of vehicle driving authority is determined by using a human-machine risk assessment result, so as to compensate for the experience disadvantages of the advanced intelligent driving systems in the complex environments, thereby fully leveraging the advantages of human-machine co-driving.

In some implementations, the process of calculating the total field strength corresponding to each driving risk partition based on the type of the risk source, the operating condition information of the vehicle, the operating condition information of the risk source, and the distance between the vehicle and the risk source in the driving environment may include: calculating a potential energy field strength corresponding to each driving risk partition based on a type of a static risk source, the operating condition information of the vehicle, and a distance between the vehicle and the static risk source in the driving environment, the operating condition information of the vehicle including a mass of the vehicle and a speed of the vehicle; calculating a kinetic energy field strength corresponding to each driving risk partition based on a type of a dynamic risk source, operating condition information of the dynamic risk source, the operating condition information of the vehicle, and a distance between the vehicle and the dynamic risk source in the driving environment, the operating condition information of the dynamic risk source including a mass of the dynamic risk source and a speed of the dynamic risk source; and calculating the total field strength corresponding to each driving risk partition based on the potential energy field strength and the kinetic energy field strength. It can be understood that the potential energy field strength corresponding to a driving risk partition refers to a field strength of a potential energy field generated by a static risk source in the driving risk partition on the vehicle, and the kinetic energy field strength corresponding to a driving risk partition refers to a field strength of a kinetic energy field generated by a dynamic risk source in the driving risk partition on the vehicle.

In some implementations, the potential energy field strength corresponding to each driving risk partition can be calculated using the following formula: ${E}_{R} = {k}_{R} \frac{m 1 v 1}{{D 1}^{2}} {T}_{R}$ where *E_{R}* represents the potential energy field strength, k*_{R}* represents a potential energy field coefficient, m1 represents the mass of the vehicle, v1 represents the speed of the vehicle, D1 represents the distance between the vehicle and the static risk source, and *T_{R}* represents a type coefficient corresponding to the type of the static risk source.

In some implementations, the kinetic energy field strength corresponding to each driving risk partition can be calculated using the following formula: ${E}_{V} = {k}_{V} \frac{\left(m1v1\right) \left(m2v2\right)}{{D 2}^{2}} {T}_{V}$ where *E_{V}* represents the kinetic energy field strength, *k_{V}* represents a kinetic energy field coefficient, m1 represents the mass of the vehicle, v1 represents the speed of the vehicle, D2 represents the distance between the vehicle and the dynamic risk source, m2 represents the mass of the dynamic risk source, v2 represents the speed of the dynamic risk source, and *T_{V}* represents a type coefficient corresponding to the type of the dynamic risk source.

In some implementations, the driving risk field is divided into a potential energy field and a kinetic energy field, and the risk sources are divided into a static risk source and a dynamic risk source. For the potential energy field, the type of the static risk source includes but is not limited to stationary objects such as a roadblock, a stationary vehicle, a stationary pedestrian, a traffic light, etc. Different types of static risk sources have different type coefficients *T_{R}*. The specific value of *T_{R}* may be set according to actual needs and is not limited herein. For example, *T_{R}* corresponding to the roadblock may be set to 0.3, *T_{R}* corresponding to the stationary vehicle may be set to 0.5, *T_{R}* corresponding to the traffic light may be set to 0.8, and *T_{R}* corresponding to the stationary pedestrian may be set to 1.0.

For the kinetic energy field, the type of the dynamic risk source includes but is not limited to moving objects such as a moving vehicle, a moving pedestrian, etc. Different types of dynamic risk sources also have different type coefficients *T_{V}*. The specific value of *T_{V}* may be set according to actual needs and is not limited herein. For example, *T_{V}* corresponding to the moving vehicle may be set to 0.5, and *T_{V}* corresponding to the moving pedestrian may be set to 1.0. It should be noted that the moving vehicle may also be subdivided and corresponding *T_{V}* values may be set for them, for example, including a motor vehicle and a non-motor vehicle.

Furthermore, it should be noted that specific values of the potential energy field coefficient k*_{R}* and the kinetic energy field coefficient *k_{V}* may be set according to actual needs, as long as it satisfies that the potential energy field coefficient k*_{R}* is greater than the kinetic energy field coefficient *k_{V}*.

When calculating the field strength in the potential energy field, the field strengths of the vehicle in potential energy fields generated by different risk sources can be determined based on positions of stationary objects such as a roadblock, a stationary vehicle, a traffic light, etc. in the driving environment and the speed of the vehicle: ${E}_{R} = {k}_{R} \frac{m 1 v 1}{{D 1}^{2}} {T}_{R}$ where *E_{R}* represents the potential energy field strength, m1 represents the mass of the vehicle, v1 represents the speed of the vehicle, and D1 represents the distance between the vehicle and the static risk source.

When calculating the field strength in the kinetic energy field, the field strengths of the vehicle in kinetic energy fields generated by different risk sources can be determined based on positions and moving speeds of moving objects that may potentially collide with the vehicle in the driving environment, such as a moving vehicle, a pedestrian, etc.: ${E}_{V} = {k}_{V} \frac{\left(m1v1\right) \left(m2v2\right)}{{D 2}^{2}} {T}_{V}$ where *E_{V}* represents the kinetic energy field strength, m1 represents the mass of the vehicle, v1 represents the speed of the vehicle, D2 represents the distance between the vehicle and the dynamic risk source, m2 represents the mass of the dynamic risk source, and v2 represents the speed of the dynamic risk source. It should be noted that for a moving vehicle mass, when the moving vehicle is identified as a motor vehicle, the motor vehicle mass may be obtained through data interaction via the Internet of Things, or a mass average value may be set for the motor vehicle based on empirical values. When the moving vehicle is identified as a non-motor vehicle, a mass average value may be set for the non-motor vehicle based on empirical values. For a moving pedestrian, three-dimensional scanning may be performed using image recognition technology to calculate a corresponding mass, or a mass average value may be set for the non-motor vehicle based on empirical values. It should be understood that a specific method for determining the mass of the moving object may be selected according to actual needs, and is not limited herein.

For each driving risk partition, the distribution of the driving risk regions perceived by the intelligent driving system may be derived based on positions of risk sources, and potential energy fields and kinetic energy fields generated by the risk sources, i.e., a sum of driving risk field strengths for each driving risk partition is determined based on the positions of the risk sources: ${E}_{i} = {E}_{R , i} + {E}_{V , i}$ where Eᵢ represents the total field strength within driving risk partition i, i ∈ [1, 2, 3, 4, 5, 6, 7, 8], E_{R,i} represents the potential energy field strength within driving risk partition i, and E_{V,i} represents the kinetic energy field strength within driving risk partition i. After calculating the total field strength for each driving risk partition, a driving risk distribution situation of the respective driving risk regions may be obtained.

In some implementations, the process of calculating the risk perception consistency index based on the total field strength corresponding to each driving risk partition and the location information of the risk region may include: taking the driving risk partitions whose total field strength is greater than a field strength threshold as target risk partitions, and taking the target risk partition with the maximum total field strength as a system-perceived risk region; and in a case where it is determined that a driver-perceived region exists in the driving risk partitions based on the location information of the risk region, performing risk region matching based on the driver-perceived region, the target risk partitions, and the system-perceived risk region to obtain a target matching degree, and taking the target matching degree as the risk perception consistency index. The driver-perceived region refers to a region where the driver's attention is focused.

In some implementations, the field strength threshold may represent a minimum field strength value corresponding to a region with the existence of a risk, i.e., as long as the field strength value of a driving risk partition is greater than the field strength threshold, it indicates that there is a risk in this driving risk partition, and thus this driving risk partition is taken as a target risk partition. If the field strength value of a driving risk partition is less than or equal to the field strength threshold, it indicates that there is no risk or the risk is very small in this driving risk partition, and thus this driving risk partition will not be taken as a target risk partition. It should be noted that a specific value of the field strength threshold may be set according to actual needs and is not limited herein. For example, the field strength threshold may be set to 0.

For the target risk partitions, in some implementations, a partition with the greatest risk identified by the intelligent driving system may be determined from the target risk partitions based on a magnitude relationship of the total field strengths among the target risk partitions, and this partition may be taken as the system-perceived risk region, i.e., the intelligent driving system assesses that the risk existing in this system-perceived risk region is the greatest.

In some implementations, a human-machine risk perception orientation consistency calculation is also performed, i.e., determining whether the region where the driver's attention is focused is within a driving risk partition based on the location information of the risk region. If the region where the driver's attention is focused is within the driving risk partition, it indicates that a driver-perceived region exists. In other words, the orientations of human and machine risk perception are consistent, then a risk perception consistency matching is further performed on the driver-perceived region, the target risk partitions, and the system-perceived risk region to obtain the target matching degree, and this target matching degree is taken as the risk perception consistency index.

In some implementations, the process of performing risk region matching based on the driver-perceived region, the target risk partitions, and the system-perceived risk region to obtain the target matching degree may include: determining whether the driver-perceived region and the system-perceived risk region are consistent; if the driver-perceived region and the system-perceived risk region are consistent, taking a first matching value as the target matching degree; if the driver-perceived region and the system-perceived risk region are inconsistent, determining second matching values corresponding to the target risk partitions based on the visual information of the driver, and taking the maximum second matching value as the target matching degree. The first matching value is greater than the second matching value.

In some implementations, matching of human-machine perceived risk regions may be performed according to a preset matching rule. For example, it is first determined whether the driver-perceived region and the system-perceived risk region are consistent. If the driver-perceived region and the system-perceived risk region are consistent, a first matching value f1 is assigned to the target matching degree. If the driver-perceived region and the system-perceived risk region are inconsistent, matching between the driver-perceived region and each target risk partition is further performed based on influencing factors such as a magnitude of a field strength, a human eye attention range, a pupil position, a gaze angle, and a driving habit (i.e., when a risk in the visual field region attracts the driver's attention, the driver uses peripheral vision to perceive nearby regions), so as to assign the same or different second matching values f2 to the target risk partitions, and take the maximum second matching value f2 as the target matching degree. It should be noted that specific settings of the first matching value f1 and the second matching value f2 may be determined according to actual needs and are not limited herein. For example, the first matching value f1 may be 1, and the second matching value f2 may be 0.8, 0.6, or 0.5, etc.

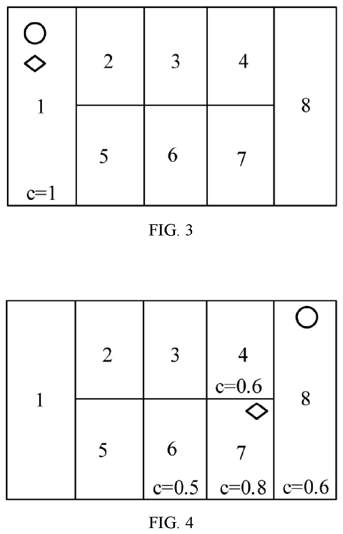

FIG. 3 is a schematic diagram of risk region matching according to some embodiments of the present disclosure, and FIG. 4 is a schematic diagram of risk region matching according to some other embodiments of the present disclosure. Referring to FIG. 3, assuming that the driver-perceived region (the partition where the circle is located in FIG. 3) and the system-perceived risk region (the partition where the diamond is located in FIG. 3) are both the driving risk partition 1, then the first matching value f1=1 is taken as the target matching value, i.e., the risk perception consistency index c is equal to 1. Referring to FIG. 4, assuming that the driver-perceived region (the partition where the circle is located in FIG. 4) is the driving risk partition 8, the system-perceived risk region (the partition where the diamond is located in FIG. 4) is the driving risk partition 7, and the target risk regions are the driving risk partitions 4, 6, 7, and 8, then the total field strength values of the driving risk partitions 4, 6, 7, and 8 are X1 to X4 respectively and in a descending order X3 > X1 > X2 > X4. In this case, since the driver-perceived region and the system-perceived risk region are inconsistent, matching is performed based on influencing factors such as a magnitude of a field strength, a human eye attention range, a pupil position, a gaze angle, and a driving habit.

For example, if the human eye attention range is on the driving risk partitions 4, 7, and 8, and the driving risk partitions 4, 7, and 8 are within the driver's pupil fixation position and gaze angle range, then 0.8 is taken as the second matching value f2 for the driving risk partition 7, 0.6 is taken as the second matching value f2 for the driving risk partition 4, 0.6 is taken as the second matching value f2 for the driving risk partition 8, and 0.5 is taken as the second matching value f2 for the driving risk partition 6. In this case, since 0.8 is the maximum, f2=0.8 is taken as the target matching value, i.e., the risk perception consistency index c is equal to 0.8.

It should be understood that at an initial moment of vehicle startup, the driving authority of the vehicle belongs to the intelligent driving system. However, since the driver has a reaction time for perceiving risks in the driving environment, and the driver may be in a state of fatigue or distraction, risk perception consistency assessment results of a current moment (i.e., a current sampling moment) and a past period of time (i.e., a preset sampling cycle) may be used as a basis during the driving authority allocation process in this embodiment.

Therefore, in some implementations, the risk perception consistency index *M* can be calculated based on an average value of the risk perception consistency indices within the preset sampling cycle: $M = \frac{1}{n} {\sum }_{j = 1}^{n} {c}_{j}$ where *cⱼ* represents the risk perception consistency index corresponding to the j-th sampling moment, and *M* represents an average value of n risk perception consistency indices within the sampling cycle.

In some implementations, after the step of determining the location information of the risk region perceived by the driver based on the visual information of the driver, the method further includes: in a case where it is determined that no driver-perceived region exists in the driving risk partitions based on the location information of the risk region, controlling driving authority to be switched and allocated to the driver, and issuing a danger warning.

In some implementations, if it is determined that the region where the driver's attention is focused is not within a driving risk partition based on the location information of the risk region, it indicates that the driver's attention is not within a driving risk region, i.e., no driver-perceived region exists. In other words, the orientations of human and machine risk perception are inconsistent. In this case, the driving authority is returned to the driver, and the danger warning is issued to remind the driver to increase attention and take over the driving authority.

In some implementations, when performing the human-machine risk perception orientation consistency calculation, it can be determined whether the orientations of human and machine risk perception are consistent based on a number of times a driving risk region is marked as a driver-perceived region within a preset sampling cycle. When a driving risk partition is fixated by the driver once, the driving risk partition is marked as the driver-perceived region once. Therefore, within the preset sampling cycle, if a driving risk partition is fixated by the driver N times, the driving risk partition is marked as the driver-perceived region N times.

In some implementations, the human-machine risk perception orientation consistency calculation is performed based on a total number of times all driving risk partitions are marked within the preset sampling cycle: ${A}_{i} = {\sum }_{j = 1}^{n} {a}_{j , i}$ ${a}_{j , i} = \left\{\begin{matrix}1 , region i is fixated by the driver at the {j}^{th} sampling moment \\ 0 , region i is not fixated by the driver at the {j}^{th} sampling moment\end{matrix}\right.$ $A = {\sum }_{i = 1}^{8} {A}_{i} , A \geq 0$ where *Aᵢ* represents a number of times the i-th driving risk partition is marked as a driver-perceived region within n sampling moments, *a_{j,i}* represents whether the i-th driving risk partition is marked as a driver-perceived region at the *j*-th sampling moment, *a_{j,i}* = 1 indicates that the *i*-th driving risk partition is marked as a driver-perceived region, *a_{j,i}* = 0 indicates that the *i*-th driving risk partition is not marked as a driver-perceived region, and *A* represents a total number of times the 8 driving risk partitions are marked as driver-perceived regions within n sampling moments. When *A* is greater than 0, it indicates that at least one partition among the 8 driving risk partitions has been fixated by the driver at least once, i.e., the region where the driver's attention is focused is within a driving risk partition, then it is determined that a driver-perceived region exists, meaning the orientations of human and machine risk perception are consistent. In this case, it is necessary to further calculate the risk perception consistency index to determine the relative driving risk consistency index, and then calculate the driving authority switching weight based on the relative driving risk consistency index.

If *A* is equal to 0, it indicates that the region where the driver's attention is focused is not within a driving risk partition, then it is determined that no driver-perceived region exists, i.e., the orientations of human and machine risk perception are inconsistent. In this case, the driving authority is returned to the driver, and the danger warning is issued to remind the driver to increase attention and take over the driving authority.

In summary, the embodiments of the present disclosure elaborate on a human-machine co-driving strategy in the advanced intelligent driving system from four aspects: driving risk region division, driving risk field strength calculation, human-machine driving risk consistency determination, and driving authority allocation. A human-machine risk assessment result is used to determine the attribution of vehicle driving authority, effectively achieving the reasonable allocation of driving authority under human-machine co-driving, so as to compensate for the experience disadvantages of the advanced intelligent driving systems in the complex environments, thereby fully leveraging the advantages of human-machine co-driving.

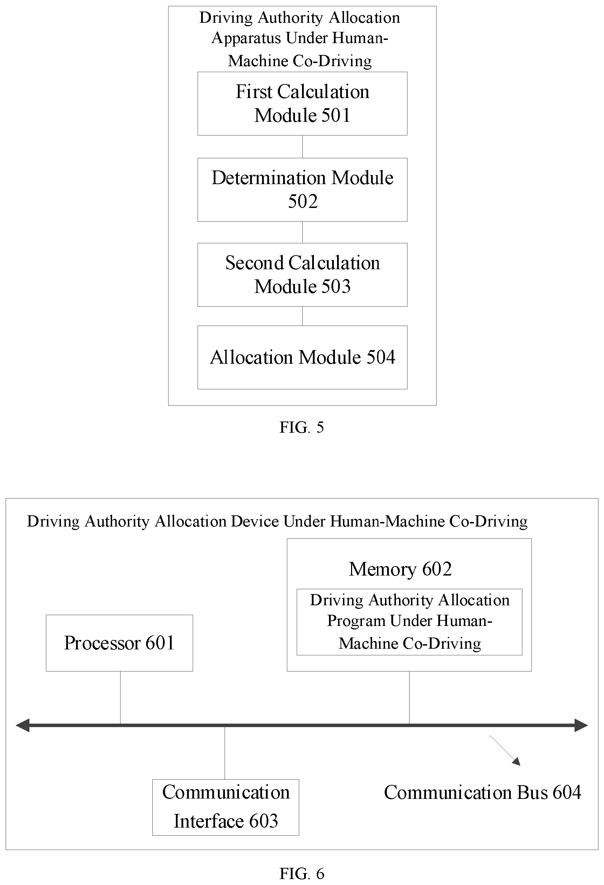

In a second aspect, some embodiments of the present disclosure further provide a driving authority allocation apparatus under human-machine co-driving. FIG. 5 is a schematic diagram of functional modules of a driving authority allocation apparatus under human-machine co-driving according to some embodiments of the present disclosure. Referring to FIG. 5, the driving authority allocation apparatus under human-machine co-driving may include: a first calculation module 501 configured to calculate a total field strength corresponding to each driving risk partition based on a type of a risk source, operating condition information of a vehicle, operating condition information of the risk source, and a distance between the vehicle and the risk source in a driving environment; a determination module 502 configured to determine location information of a risk region perceived by a driver based on visual information of the driver; a second calculation module 503 configured to calculate a risk perception consistency index based on the total field strength corresponding to each driving risk partition and the location information of the risk region; and an allocation module 504 configured to determine a driving authority switching weight based on the risk perception consistency index and a preset risk perception consistency index threshold to perform driving authority switching and allocation according to the driving authority switching weight.

In some implementations, the first calculation module 501 is specifically configured to: calculate a potential energy field strength corresponding to each driving risk partition based on a type of a static risk source, the operating condition information of the vehicle, and a distance between the vehicle and the static risk source in the driving environment, the operating condition information of the vehicle including a mass of the vehicle and a speed of the vehicle; calculate a kinetic energy field strength corresponding to each driving risk partition based on a type of a dynamic risk source, operating condition information of the dynamic risk source, the operating condition information of the vehicle, and a distance between the vehicle and the dynamic risk source in the driving environment, the operating condition information of the dynamic risk source including a mass of the dynamic risk source and a speed of the dynamic risk source; and calculate the total field strength corresponding to each driving risk partition based on the potential energy field strength and the kinetic energy field strength.

In some implementations, the potential energy field strength is calculated using the following formula: ${E}_{R} = {k}_{R} \frac{m 1 v 1}{D {1}^{2}} {T}_{R}$ where *E_{R}* represents the potential energy field strength, k*_{R}* represents a potential energy field coefficient, m1 represents the mass of the vehicle, v1 represents the speed of the vehicle, D1 represents the distance between the vehicle and the static risk source, and *T_{R}* represents a type coefficient corresponding to the type of the static risk source.

In some implementations, the kinetic energy field strength is calculated using the following formula: ${E}_{V} = {k}_{V} \frac{\left(m1v1\right) \left(m2v2\right)}{D {2}^{2}} {T}_{V}$ where *E_{V}* represents the kinetic energy field strength, *k_{V}* represents a kinetic energy field coefficient, m1 represents the mass of the vehicle, v1 represents the speed of the vehicle, D2 represents the distance between the vehicle and the dynamic risk source, m2 represents the mass of the dynamic risk source, v2 represents the speed of the dynamic risk source, and *T_{V}* represents a type coefficient corresponding to the type of the dynamic risk source.

In some implementations, the second calculation module 503 is specifically configured to: take the driving risk partitions whose total field strength is greater than a field strength threshold as target risk partitions, and take the target risk partition with the maximum total field strength as a system-perceived risk region; and in a case where it is determined that a driver-perceived region exists in the driving risk partitions based on the location information of the risk region, perform risk region matching based on the driver-perceived region, the target risk partitions, and the system-perceived risk region to obtain a target matching degree, and take the target matching degree as the risk perception consistency index.

In some implementations, the second calculation module 503 is specifically further configured to: determine whether the driver-perceived region and the system-perceived risk region are consistent; if the driver-perceived region and the system-perceived risk region are consistent, take a first matching value as the target matching degree; and if the driver-perceived region and the system-perceived risk region are inconsistent, determine second matching values corresponding to the target risk partitions based on the visual information of the driver, and take the maximum second matching value as the target matching degree. The first matching value is greater than the second matching value.

In some implementations, the allocation module 504 is further configured to: in a case where it is determined that no driver-perceived region exists in the driving risk partitions based on the location information of the risk region, control driving authority to be switched and allocated to the driver, and issue a danger warning.

It should be noted that the function implementations of the modules in the above driving authority allocation apparatus under human-machine co-driving correspond to the steps in the driving authority allocation method under human-machine co-driving in the above embodiments, and their functions and implementation processes will not be described repeatedly.

In a third aspect, some embodiments of the present disclosure provide a driving authority allocation device under human-machine co-driving, including a processor, a memory, and a driving authority allocation program under human-machine co-driving stored on the memory and executable by the processor. When the driving authority allocation program under human-machine co-driving is executed by the processor, steps of the driving authority allocation method under human-machine co-driving provided by any one of the above-described method embodiments are implemented. For example, the driving authority allocation device under human-machine co-driving may be a vehicle-mounted terminal, or the driving authority allocation device under human-machine co-driving may also be a device with data processing functions such as a personal computer (PC), a notebook computer, a server, etc.

FIG. 6 is a schematic diagram of a hardware structure of a driving authority allocation device under human-machine co-driving according to some embodiments of the present disclosure. Referring to FIG. 6, in some embodiments of the present disclosure, the driving authority allocation device under human-machine co-driving may include a processor 601, a memory 602, a communication interface 603, and a communication bus 604.

The communication bus 604 may be of any type for interconnecting the processor 601, the memory 602, and the communication interface 603.

The communication interface 603 includes an input/output (I/O) interface, a physical interface, a logical interface, etc., for interconnecting devices within the driving authority allocation device under human-machine co-driving, and for interconnecting the driving authority allocation device under human-machine co-driving with other devices (e.g., other computing devices or user devices). The physical interface may be an Ethernet interface, a fiber optic interface, an ATM interface, etc. The user device may be a display screen, a keyboard, etc.

The memory 602 may be various types of storage media, such as a random-access memory (RAM), a read-only memory (ROM), a non-volatile RAM (NVRAM), a flash memory, an optical storage, a hard disk, a programmable ROM (PROM), an erasable PROM (EPROM), an electrically erasable PROM (EEPROM), etc.

The processor 601 may be a general-purpose processor. The general-purpose processor may call the driving authority allocation program under human-machine co-driving stored in the memory and execute the driving authority allocation method under human-machine co-driving provided by the embodiments of the present disclosure. For example, the general-purpose processor may be a central processing unit (CPU). The method executed when the driving authority allocation program under human-machine co-driving is called may refer to the embodiments of the driving authority allocation method under human-machine co-driving provided by the present disclosure, and will not be described in detail herein.

Those skilled in the art may understand that the hardware structure shown in FIG. 6 does not constitute a limitation on the present disclosure, and may include more or fewer components than those shown in the figure, or combine some components, or have a different arrangement of components.

In a fourth aspect, some embodiments of the present disclosure further provide a computer-readable storage medium. The computer-readable storage medium stores a driving authority allocation program under human-machine co-driving. When the driving authority allocation program under human-machine co-driving is executed by a processor, steps of the driving authority allocation method under human-machine co-driving provided by the above-described method embodiments of the present disclosure are implemented. It should be noted that the method implemented when the driving authority allocation program under human-machine co-driving is executed may refer to the embodiments of the driving authority allocation method under human-machine co-driving provided by the present disclosure, and will not be described in detail herein.

In a fifth aspect, some embodiments of the present disclosure provide a vehicle, including the driving authority allocation device under human-machine co-driving provided by the third aspect as described above.

In a sixth aspect, some embodiments of the present disclosure provide a computer program product, including computer instructions. When the computer instructions are executed by a processor, steps of the driving authority allocation method under human-machine co-driving provided by the above-described method embodiments are implemented.

It should be noted that the embodiment numbers of the present disclosure described above are for description purposes only and do not represent the superiority or inferiority of the embodiments.

In the specification and claims of the present disclosure and the above drawings, the terms "include/comprise" and "have" and any variations thereof are intended to cover non-exclusive inclusion. For example, a process, method, system, product, or device that includes a series of steps or units is not limited to the listed steps or units, but optionally also includes steps or units not listed, or optionally also includes other steps or units inherent to these processes, methods, products, or devices. Descriptions such as the terms "first", "second", and "third" are used to distinguish different objects, etc., and do not represent a sequence, nor do they limit "first", "second", and "third" to being different types.

In the description of the embodiments of the present disclosure, "exemplary", "for example", or "such as" are used to indicate examples, illustrations, or explanations. Any embodiment or design scheme described as "exemplary", "for example", or "such as" in the embodiments of the present disclosure should not be construed as being more preferred or advantageous than other embodiments or design schemes. Rather, the use of words such as "exemplary", "for example", or "such as" is intended to present related concepts in a concrete manner.

In the description of the embodiments of the present disclosure, unless otherwise specified, the character "/" means or, for example, A/B may mean A or B. The term "and/or" as used herein is merely an association relationship describing associated objects, indicating that three relationships may exist, for example, A and/or B may mean: A alone exists, A and B exist simultaneously, and B alone exists. In addition, in the description of the embodiments of the present disclosure, "plurality" means two or more.

In some processes described in the embodiments of the present disclosure, multiple operations or steps appearing in a specific order are included, but it should be understood that these operations or steps may be performed not in the order they appear in the embodiments of the present disclosure or in parallel, and the sequence numbers of the operations are only used to distinguish different operations, and the sequence numbers themselves do not represent any execution order. In addition, these processes may include more or fewer operations, and these operations or steps may be performed sequentially or in parallel, and these operations or steps may be combined.

Through the description of the above embodiments, those skilled in the art may clearly understand that the methods of the above embodiments may be implemented by means of a software and a necessary general hardware platform, and may also be implemented by hardware, but in many cases the former is a better implementation. Based on such an understanding, the technical solution of the present disclosure essentially or the part that contributes to the prior art may be embodied in the form of a software product stored in a storage medium (such as ROM/RAM, a magnetic disk, an optical disk) as described above, including several instructions for causing a terminal device to execute the methods described in various embodiments of the present disclosure.

The above are only exemplary embodiments of the present disclosure and are not intended to limit the patent scope of the present disclosure. Any equivalent structure or equivalent process transformation made using the specification and accompanying drawings of the present disclosure, or directly or indirectly applied to other related technical fields, are similarly included in the scope of patent protection of the present disclosure.

## Claims

1. A driving authority allocation method under human-machine co-driving, comprising:
calculating a total field strength corresponding to each driving risk partition based on a type of a risk source, operating condition information of a vehicle, operating condition information of the risk source, and a distance between the vehicle and the risk source in a driving environment;
determining location information of a risk region perceived by a driver based on visual information of the driver;
calculating a risk perception consistency index based on the total field strength corresponding to each driving risk partition and the location information of the risk region; and
determining a driving authority switching weight based on the risk perception consistency index and a preset risk perception consistency index threshold to perform driving authority switching and allocation according to the driving authority switching weight.

2. The driving authority allocation method under human-machine co-driving of claim 1, wherein calculating the total field strength corresponding to each driving risk partition based on the type of the risk source, the operating condition information of the vehicle, the operating condition information of the risk source, and the distance between the vehicle and the risk source in the driving environment comprises:
calculating a potential energy field strength corresponding to each driving risk partition based on a type of a static risk source, the operating condition information of the vehicle, and a distance between the vehicle and the static risk source in the driving environment, wherein the operating condition information of the vehicle comprises a mass of the vehicle and a speed of the vehicle;
calculating a kinetic energy field strength corresponding to each driving risk partition based on a type of a dynamic risk source, operating condition information of the dynamic risk source, the operating condition information of the vehicle, and a distance between the vehicle and the dynamic risk source in the driving environment, wherein the operating condition information of the dynamic risk source comprises a mass of the dynamic risk source and a speed of the dynamic risk source; and
calculating the total field strength corresponding to each driving risk partition based on the potential energy field strength and the kinetic energy field strength.

3. The driving authority allocation method under human-machine co-driving of claim 2, wherein the potential energy field strength is calculated using the following formula: ${E}_{R} = {k}_{R} \frac{m 1 v 1}{D {1}^{2}} {T}_{R} ,$ where *E_{R}* represents the potential energy field strength, k*_{R}* represents a potential energy field coefficient, m1 represents the mass of the vehicle, v1 represents the speed of the vehicle, D1 represents the distance between the vehicle and the static risk source, and *T_{R}* represents a type coefficient corresponding to the type of the static risk source.

4. The driving authority allocation method under human-machine co-driving of claim 2, wherein the kinetic energy field strength is calculated using the following formula: ${E}_{V} = {k}_{V} \frac{\left(m1v1\right) \left(m2v2\right)}{D {2}^{2}} {T}_{V} ,$ where *E_{V}* represents the kinetic energy field strength, *k_{V}* represents a kinetic energy field coefficient, m1 represents the mass of the vehicle, v1 represents the speed of the vehicle, D2 represents the distance between the vehicle and the dynamic risk source, m2 represents the mass of the dynamic risk source, v2 represents the speed of the dynamic risk source, and *T_{V}* represents a type coefficient corresponding to the type of the dynamic risk source.

5. The driving authority allocation method under human-machine co-driving of claim 1, wherein calculating the risk perception consistency index based on the total field strength corresponding to each driving risk partition and the location information of the risk region comprises:
taking the driving risk partitions whose total field strength is greater than a field strength threshold as target risk partitions, and taking the target risk partition with the maximum total field strength as a system-perceived risk region; and
in a case where it is determined that a driver-perceived region exists in the driving risk partitions based on the location information of the risk region, performing risk region matching based on the driver-perceived region, the target risk partitions, and the system-perceived risk region to obtain a target matching degree, and taking the target matching degree as the risk perception consistency index.

6. The driving authority allocation method under human-machine co-driving of claim 5, wherein performing risk region matching based on the driver-perceived region, the target risk partitions, and the system-perceived risk region to obtain the target matching degree comprises:
determining whether the driver-perceived region and the system-perceived risk region are consistent;
if the driver-perceived region and the system-perceived risk region are consistent, taking a first matching value as the target matching degree; and
if the driver-perceived region and the system-perceived risk region are inconsistent, determining second matching values corresponding to the target risk partitions based on the visual information of the driver, and taking the maximum second matching value as the target matching degree, wherein the first matching value is greater than the second matching value.

7. The driving authority allocation method under human-machine co-driving of claim 1, after the step of determining the location information of the risk region perceived by the driver based on the visual information of the driver, the method further comprising:
in a case where it is determined that no driver-perceived region exists in the driving risk partitions based on the location information of the risk region, controlling driving authority to be switched and allocated to the driver, and issuing a danger warning.

8. A driving authority allocation apparatus under human-machine co-driving, comprising:
a first calculation module configured to calculate a total field strength corresponding to each driving risk partition based on a type of a risk source, operating condition information of a vehicle, operating condition information of the risk source, and a distance between the vehicle and the risk source in a driving environment;
a determination module configured to determine location information of a risk region perceived by a driver based on visual information of the driver;
a second calculation module configured to calculate a risk perception consistency index based on the total field strength corresponding to each driving risk partition and the location information of the risk region; and
an allocation module configured to determine a driving authority switching weight based on the risk perception consistency index and a preset risk perception consistency index threshold to perform driving authority switching and allocation according to the driving authority switching weight.

9. A driving authority allocation device under human-machine co-driving, comprising a processor, a memory, and a driving authority allocation program under human-machine co-driving stored on the memory and executable by the processor, wherein when the driving authority allocation program under human-machine co-driving is executed by the processor, steps of the driving authority allocation method under human-machine co-driving of any one of claims 1 to 7 are implemented.

10. A vehicle, comprising the driving authority allocation device under human-machine co-driving of claim 9.

11. A computer-readable storage medium, comprising a driving authority allocation program under human-machine co-driving stored thereon, wherein when the driving authority allocation program under human-machine co-driving is executed by a processor, steps of the driving authority allocation method under human-machine co-driving of any one of claims 1 to 7 are implemented.

12. A computer program product, comprising computer instructions, wherein when the computer instructions are executed by a processor, steps of the driving authority allocation method under human-machine co-driving of any one of claims 1 to 7 are implemented.
